# EUROPÄISCHE PATENTSCHRIFT

(11) **EP 1 838 554 B1**
(45) Veröffentlichungstag und Bekanntmachung des Hinweises auf die Patenterteilung: **03.03.2010**
(21) Anmeldenummer: 06705787.7
(22) Anmeldetag: 16.01.2006
(51) Int. Cl.: B60R 5/04, B60J 5/10, B60R 9/10

(54) **HECKKLAPPENANORDNUNG**
HATCHBACK ASSEMBLY
SYSTEME DE HAYON

(30) Priorität: 17.01.2005 DE 102005002203
(43) Veröffentlichungstag der Anmeldung: 03.10.2007
(73) Patentinhaber: Webasto AG, 82131 Stockdorf (DE)
(72) Erfinder: POLLAK, Martin, 82178 Puchheim (DE)
(86) Internationale Anmeldenummer: PCT/DE2006/000048
(87) Internationale Veröffentlichungsnummer: WO 2006/076885

(56) Entgegenhaltungen:
- DE-A1- 1 630 032
- FR-A- 2 745 772
- FR-A- 2 796 033
- FR-A- 2 845 053
- GB-A- 507 800
- US-A- 2 353 820
- US-A- 3 082 033

## Beschreibung

Die Erfindung betrifft eine Heckklappenanordnung nach dem Oberbegriff des Patentanspruchs 1 sowie ein Erweiterungselement nach dem Oberbegriff des Patentanspruchs 15.

Aus der DE 196 19 126 AI ist eine Heckklappenanordnung eines Kraftfahrzeugs bekannt, die im Bereich einer Fahrzeughecköffnung angeordnet ist und in Schließstellung einen Laderaum nach hinten begrenzt. Die Heckklappenanordnung umfasst ein oberes Heckklappenteil und ein unteres Heckklappenteil. Das obere Heckklappenteil ist im Bereich des oberen Randes der Hecköffnung angelenkt und zum Öffnen nach oben verschwenkbar. Das untere Heckklappenteil ist im Bereich eines unteren Randes der Fahrzeughecköffnung angelenkt und in Öffnungsstellung im Wesentlichen horizontal ausgerichtet.

Das untere Heckklappenteil kann bei derartig ausgebildeten Heckklappenanordnungen in der Regel einzeln, d. h. unabhängig vom oberen Heckklappenteil, geöffnet werden. Lange Gegenstände können dann so transportiert werden, dass sie nach hinten aus dem Laderaum durch den aufgrund des geöffneten unteren Heckklappenteils verbleibenden Öffnungsbereich der Fahrzeughecköffnung austreten. Es besteht jedoch dann das Problem, dass über diesen Öffnungsbereich Schmutz und Abgase in den Innenraum des Fahrzeugs eindringen können.

Aus der US 2,353,820 ist eine Heckklappenanordnung eines Kraftfahrzeuges gemäß dem Oberbegriff des Patentanspruchs 1 bekannt, die mit einer Laderaumerweiterung versehen werden kann. Die Heckklappenanordnung umfasst ein oberes Heckklappenteil und ein unteres Heckklappenteil, das im Bereich eines unteren Randes einer Fahrzeughecköffnung angelenkt ist und in Öffnungsstellung im Wesentlichen horizontal ausgerichtet ist. An der Innenseite des unteren Heckklappenteils ist ein Erweiterungselement fixiert, das in Öffnungsstellung des unteren Heckklappenteils auf dieses montiert werden kann und den Laderaum erweitert und auch nach hinten verschließt.

Aus der US 3,082,033 ist ein Erweiterungsmodul für einen Kofferraum eines Stufenheckfahrzeugs bekannt. Dieses Erweiterungsmodul bildet eine Box, die auf ein einen Laderaum heckseitig begrenzendes Klappelement in dessen Öffnungsstellung aufsetzbar ist und vorne von einem Kofferraumdeckel begrenzt bzw. verschlossen ist, der sich bei aufgesetzter Box in Öffnungsstellung befindet.

Aus der Druckschrift DE 16 30 032 A ist ein Kraftfahrzeug mit einer Heckklappenanordnung bekannt, die ein oberes Heckklappenteil und ein unteres Heckklappenteil aufweist. Das untere Heckklappenteil ist in eine im wesentlichen horizontale Ausrichtung ausklappbar. In dieser Ausrichtung kann auf die Innenseite des unteren Heckklappenteils ein zusammenklappbarer Koffer aufgesetzt werden.

Der Erfindung liegt die Aufgabe zugrunde, eine Heckklappenanordnung der einleitend genannten Gattung mit einem Laderaumerweiterungselement bereitzustellen, das eine erweiterte Funktionalität bietet.

Diese Aufgabe ist erfindungsgemäß durch die Heckklappenanordnung mit den Merkmalen des Patentanspruchs 1 sowie ein Erweiterungselement mit den Merkmalen des Patentanspruchs 15 gelöst.

Gemäß der Erfindung ist mithin an einem nach unten wegklappbaren, unteren Heckklappenteil einer mehrteiligen, horizontal geteilten Fahrzeugheckklappe eine aus dem Erweiterungselement gebildete Abdeckung vorzugsweise lösbar fixiert, die einen Raum begrenzt, der sich nach hinten an den Laderaum des Fahrzeugs anschließt. Es entsteht dadurch ein nach außen geschlossener zusätzlicher Stauraum. Der insgesamt zur Verfügung stehende Stauraum ist also vergrößert. Damit können Gegenstände mit einer Überlänge, die maximal der Erstreckung des Erweiterungselements in Fahrzeuglängsrichtung entspricht, sicher und ohne Beeinträchtigung des Komforts in dem Fahrzeuginnenraum transportiert werden. Das Erweiterungselement stellt gleichzeitig eine Sicherung für die zu transportierenden Gegenstände dar, da es als hinterer Anschlag für diese dienen kann. Da das Erweiterungselement den Öffnungsbereich abdeckt, der durch die Öffnung des unteren Heckklappenteils entsteht, ist der eigentliche Laderaum trotz geöffnetem unterem Heckklappenteil nach außen verschlossen. Ein Eindringen von Schmutz und/oder Abgasen in den Laderaum kann damit wirkungsvoll verhindert werden.

Das Erweiterungselement und damit der von dem Erweiterungselement gebildete Stauraum können nach hinten mit dem unteren Heckklappenteil enden oder auch über dieses vorstehen.

Um die Dichtung des Fahrzeuginnenraums zu verbessern, ist das Erweiterungselement bei einer bevorzugten Ausführungsform der Heckklappenanordnung nach der Erfindung an seinen Rändern zumindest bereichsweise mit einer vorzugsweise einem Dichtprofil bzw. einer Dichtlippe gebildeten Dichteinrichtung versehen, die mit dem unteren Heckklappenteil, dem oberen Heckklappenteil und/oder Fahrzeugkarosseriebereichen zusammenwirkt. Die seitlichen Ränder des Erweiterungselements können auch mit einem Dichtprofil zusammenwirken, das an den korrespondierenden Rändern der Hecköffnung ohnehin vorgesehen ist und bei geschlossenem unterem Heckklappenteil mit diesem zusammenwirkt.

Die Fixierung des Erweiterungselements an dem unteren Heckklappenteil kann in vielfältiger Weise erfolgen. Beispielsweise ist das Erweiterungselement über Führungselemente, wie Führungsschienen, auf das untere Heckklappenteil aufgeschoben. In seiner Montagestellung kann das Erweiterungselement dann an einer Rasteinrichtung des unteren Heckklappenteils verrastet sein.

Alternativ kann das Erweiterungselement auf das untere Heckklappenteil aufgeklipst sein. Auch kann das Erweiterungselement mittels einer Spannrichtung, die beispielsweise aus Reibern oder dergleichen gebildet ist, an dem unteren Heckklappenteil fixiert sein. Auch eine Verschraubung des Erweiterungselements an dem Heckklappenteil kann vorgesehen sein.

Um das obere Heckklappenteil in Schließstellung arretieren zu können, weist das Erweiterungselement in seinem oberen Randbereich vorzugsweise eine Verriegelungseinrichtung für das obere Heckklappenteil auf. Die Verriegelungseinrichtung ist beispielsweise von einem Schlossbügel gebildet, der mit einem an dem oberen Heckklappenteil integrierten Schlossmechanismus zusammenwirkt.

Bei einer besonders stabilen Ausführungsform ist das Erweiterungselement im Wesentlichen starr ausgebildet. Beispielsweise kann es aus vorzugsweise glasfaserverstärktem Kunststoff gefertigt sein. Denkbar ist es aber auch, das Erweiterungselement aus Metall zu fertigen.

Eine stauraumfreundliche Ausführungsform stellt ein aus einer Folie gebildetes Erweiterungselement dar. Das Erweiterungselement kann dann bei Nichtbenutzung gefaltet und beispielsweise in einer Stautasche untergebracht werden. In diesem Fall ist es zweckmäßig, wenn das Erweiterungselement zur Stabilisierung mit Stangen versehen werden kann, die die Form des zusätzlichen, von dem Erweiterungselement begrenzten Stauraums vorgeben.

Das Erweiterungselement kann auch so ausgebildet sein, dass es bei Nichtnutzung an der Innenseite des unteren Heckklappenteil zusammengefaltet ist und im Bedarfsfall ausgefaltet werden kann.

Insbesondere eine starre Ausführungsform des Erweiterungselements kann so ausgelegt sein, dass sie als Ablagewanne in dem dann nicht nach hinten erweiterten Laderaum fixierbar ist. In diesem Fall kann das Erweiterungselement also auch die Funktion einer Schmutzwanne oder dergleichen übernehmen, die insbesondere zum gesicherten Transport schmutziger Gegenständen in dem Laderaum genutzt werden kann. In dem Laderaum sind dann vorzugsweise Fixiereinrichtungen vorgesehen, mittels derer eine Fixierung des Erweiterungselements möglich ist.

Eine spezielle Ausführungsform des Erweiterungselements umfasst eine Lastenträgereinrichtung. Diese ist vorzugsweise an der Oberseite des Erweiterungselements ausgebildet und dient vorzugsweise zum Transport sperriger Gegenstände.

Beispielsweise umfasst die Lastenträgereinrichtung einen Fahrradträger, der nach Art üblicher Heckfahrradträger ausgebildet ist und Schienen zur Aufnahme der Laufräder des zu transportierenden Fahrrads aufweist. Die Schienen zur Aufnahme der Laufräder können lösbar an dem Erweiterungselement fixiert sein, können aber auch klappbar oder teleskopierbar sein, um nur im Bedarfsfall zur Verfügung zu stehen.

Die Lastenträgereinrichtung kann auch eine an der Oberseite des Erweiterungselements ausgebildete Abstellfläche für Sperrgut oder dergleichen umfassen. Die Abstellfläche kann mit einer Rutschsicherung versehen sein.

Zur Erhöhung der Sicherheit kann das Erweiterungselement auch Beleuchtungsmittel für das betreffende Fahrzeug, Abstandssensoren und/oder auch ein Fahrzeugkennzeichenfeld umfassen.

Es kann auch eine Schaltung vorgesehen sein, die in einem Stoßfänger integrierte, für eine Einparkassistenten oder dergleichen genutzte Abstandssensoren so steuert, dass das durch das heruntergeklappte untere Heckklappenteil verlängerte Fahrzeugheck berücksichtigt wird.

Wenn das Erweiterungselement elektrische Einrichtungen umfasst, ist es vorteilhaft, wenn es mit elektrischen Kontaktelementen versehen ist, die mit korrespondierenden, elektrischen Kontaktelementen zusammenwirken, die vorzugsweise an dem unteren Heckklappenteil ausgebildet sind. Die Kontaktelemente sind vorzugsweise aus Steckverbindern gebildet. Insbesondere können Plattenkontakte vorgesehen sein, an denen Kontaktstifte oder dergleichen angreifen.

Die Erfindung hat des Weiteren ein Erweiterungselement für einen Laderaum eines Fahrzeugs mit den Merkmalen des Patentanspruchs 16 zum Gegenstand. Ein solches Erweiterungselement kann im Bedarfsfall auf einfache Weise an einem unteren Heckklappenelement einer mehrteiligen Fahrzeugheckklappe fixiert werden, so dass eine Vergrößerung des Fahrzeugladeraums nach hinten erreicht wird.

Weitere Vorteile und vorteilhafte Ausgestaltungen des Gegenstands nach der Erfindung sind der Beschreibung, der Zeichnung und den Patentansprüchen entnehmbar.

Zwei Ausführungsbeispiele eines erfindungsgemäß ausgebildeten Erweiterungselements sind in der Zeichnung schematisch vereinfacht dargestellt und werden in der nachfolgenden Beschreibung näher erläutert. Es zeigt
- Fig. 1: eine Heckansicht eines Kraftfahrzeugs mit zweiteiliger Heckklappe;
- Fig. 2: eine Fig. 1 entsprechende Ansicht, mit einem Laderaumerweiterungselement;
- Fig. 3: die Verwendung des Laderaumserweiterungselements als Ladewanne;
- Fig. 4: eine Fig. 3 entsprechende Ansicht, mit geschlossenem unteren Heckklappenteil und geöffnetem oberen Heckklappenteil; und
- Fig. 5: eine zweite Ausführungsform eines Laderaumerweiterungselements.

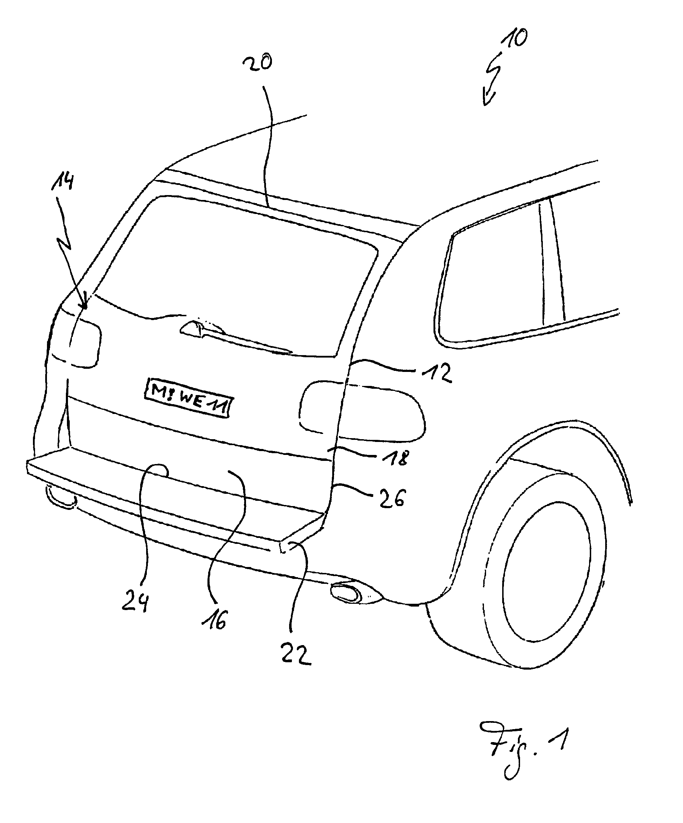

In Fig. 1 ist ein als sogenanntes SUV (sports utility vehicle) ausgebildetes Kraftfahrzeug 10 dargestellt, das eine Hecköffnung 12 aufweist, die mittels einer Heckklappenanordnung 14 verschließbar ist. Die Heckklappenanordnung 14 begrenzt einen Laderaum 16 des Fahrzeugs 10 nach hinten.

Die Heckklappenanordnung 14 ist im unteren Bereich horizontal geteilt und umfasst ein oberes Heckklappenteil 18, das im Bereich eines oberen Randes 20 schwenkbar an dem Fahrzeugaufbau gelagert ist und mithin zum Öffnen nach oben verschwenkbar ist, sowie ein unteres Heckklappenteil 22, das im Bereich eines unteren Randes 24 der Hecköffnung 12 schwenkbar an dem Fahrzeugaufbau gelagert ist und unabhängig von einer Öffnung des oberen Heckklappenteils 18 nach unten klappbar ist. In Schließstellung begrenzt das untere Heckklappenteil 18 mit seiner Innenseite den Laderaum 16 an dessen Hinterseite. Bei alleiniger Öffnung des unteren Heckklappenteils 22 verbleibt damit zwischen dem oberen Heckklappenteil 18 und dem unteren Rand 24 der Hecköffnung 12 ein Öffnungsbereich 26, über den der Laderaum 16 zugänglich ist. Das untere Heckklappenteil 22 ist in seiner in Fig. 1 dargestellten Öffnungsstellung arretierbar, so dass durch die Innenseite des unteren Heckklappenteils eine sich nach hinten erstreckende Verlängerung der Ladefläche des Laderaums 16 ergibt.

Die Heckklappenanordnung 14, insbesondere das obere Heckklappenteil 18, kann aus Polycarbonat gefertigt sein, wobei in das obere Heckklappenteil 18 eine Kennzeichenbeleuchtung, Rückleuchte und dergleichen integriert sein können.

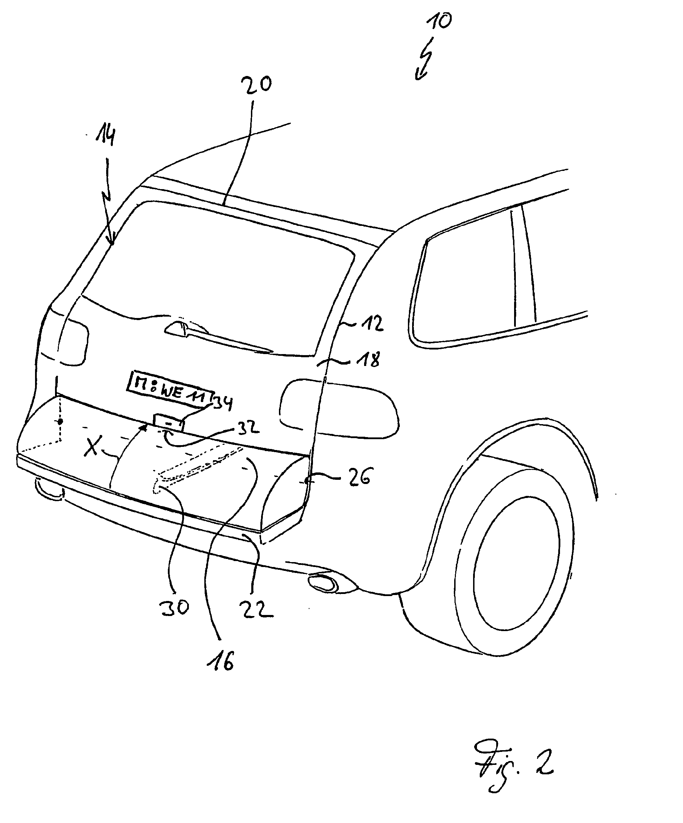

Wie in Fig. 2 dargestellt, kann zur Erweiterung des Laderaums 16 auf die Innenseite des unteren Heckklappenteils 22 ein Laderaumerweiterungselement 28 aufgesetzt sein, dessen Ränder einerseits entlang der Ränder des unteren Heckklappenteils 22 und andererseits entlang der Ränder des zwischen dem oberen Heckklappenteil 18 und dem unteren Rand der Hecköffnung 12 angeordneten Öffnungsbereichs verlaufen. Durch das Erweiterungselement 28 ist damit der Laderaum 16 nach hinten vergrößert und trotz geöffnetem unterem Heckklappenteil 22 verschlossen. Durch die Vergrößerung des Laderaums 16 können auch lange Gegenstände, wie beispielsweise Ski 30 im Fahrzeuginneren transportiert werden.

Zur Fixierung ist das Erweiterungselement 28 über ein in der Zeichnung nicht näher dargestelltes Schienensystem von hinten auf das untere Heckklappenteil 22 aufgeschoben und in seiner Betriebsstellung an einer Rasteinrichtung des unteren Heckklappenteils 22 verrastet.

Wenn eine Erweiterung des Laderaums 16 nicht mehr erforderlich ist, kann das Erweiterungselement 28 wieder abgenommen und das untere Heckklappenteil 22 zum Verschließen des Öffnungsbereichs 26 nach oben geklappt werden. Jedoch kann das untere Heckklappenteil 22, wie in Fig. 2 anhand des Pfeils X dargestellt, auch mit aufgesetztem Erweiterungselement 28 geschlossen werden.

Um eine gute Abdichtung des Öffnungsbereichs 26 zu gewährleisten, ist das Erweiterungselement an seinen Rändern mit Dichtlippen bzw. Dichtprofilen versehen, die mit dem unteren Heckklappenteil 22, dem oberen Heckklappenteil 18 und den seitlichen Rändern der Hecköffnung 16 zusammenwirken.

An seinem oberen Rand hat das Erweiterungselement 28 einen Schlossbügel 32, der mit einem Schloss 34 am unteren Rand des oberen Heckklappenteils 18 zusammenwirkt.

Im vorliegenden Fall ist das Erweiterungselement 28 aus mit Glasfasern verstärktem Polyurethan nach einem sogenannten LFI(long fiber injection)-Verfahren hergestellt. Alternativ kann das Erweiterungselement 28 aber auch aus einer mit einem Drahtrahmen oder dergleichen aufgespannten Folie bestehen.

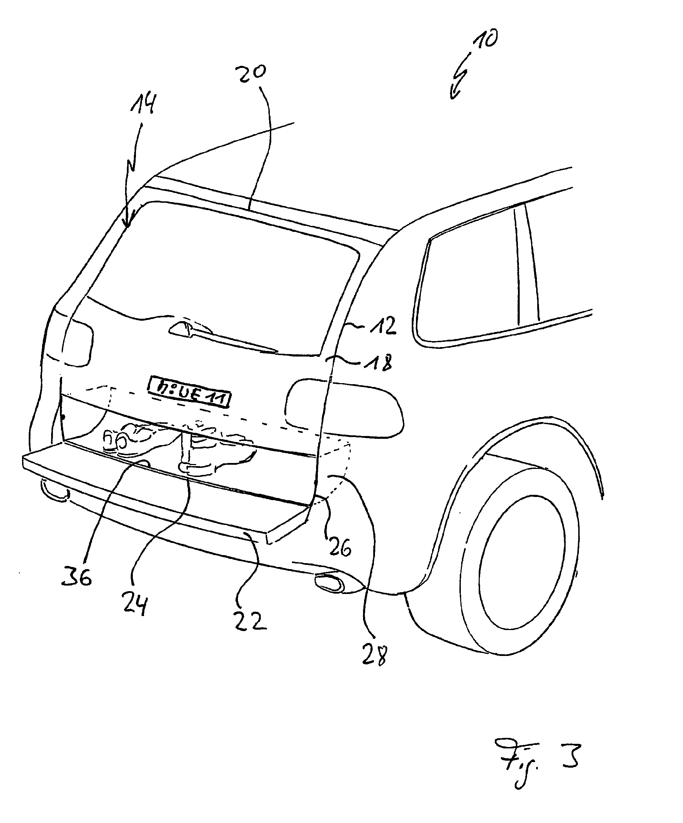

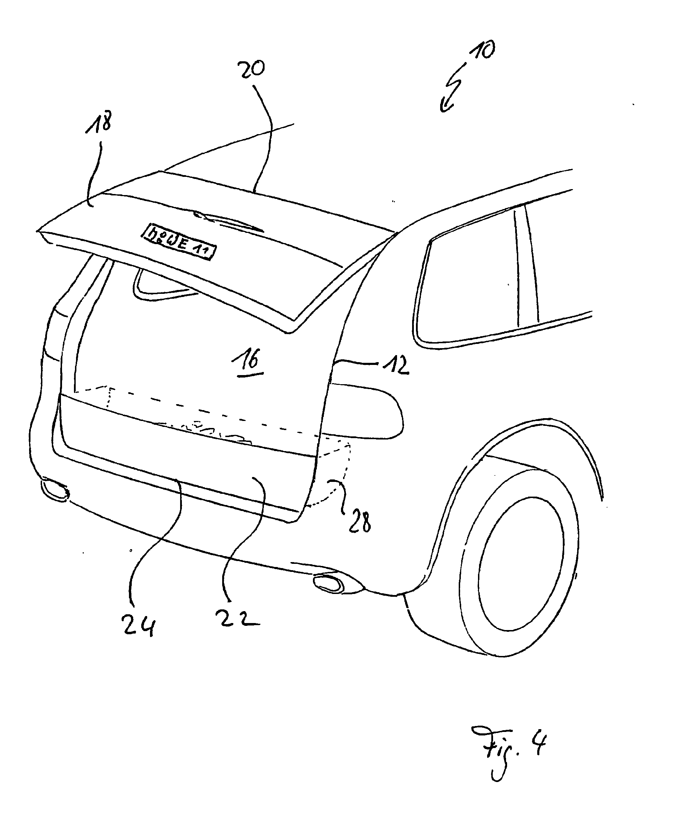

Das Erweiterungselement 28 ist derart ausgebildet, dass es, wie in den Fig. 3 und 4 dargestellt, in umgekehrter Anordnung als Ablagewanne im hinteren Bereich des Laderaums 16 einsetzbar ist. Eine derartige Ablagewanne kann beispielsweise zum Verstauen schmutziger Gegenstände, wie von Schuhen, genutzt werden. Zur Fixierung in dieser Position kann das Erweiterungselement 28 entweder zwischen den Seitenwänden des Laderaums 16 eingespannt sein oder mit einer eigens hierfür vorgesehenen Fixiereinrichtung verbunden sein.

An seinem unteren hinteren Rand, der bei der Nutzung als Erweiterung für den Laderaum vorne oben liegt, hat das Erweiterungselement 28 einen nach oben weisenden Vorsprung 36 nach Art einer Ladekante, der sicherstellt, dass der Schmutz in der Ablagewanne gehalten wird.

Das als Ablagewanne genutzte Erweiterungselement 28 kann entweder, wie in Fig. 4 dargestellt, bei geöffnetem oberen Heckklappenteils 18 oder, wie in Fig. 3 dargestellt, bei geöffnetem unteren Heckklappenteils 22 be- und entladen werden.

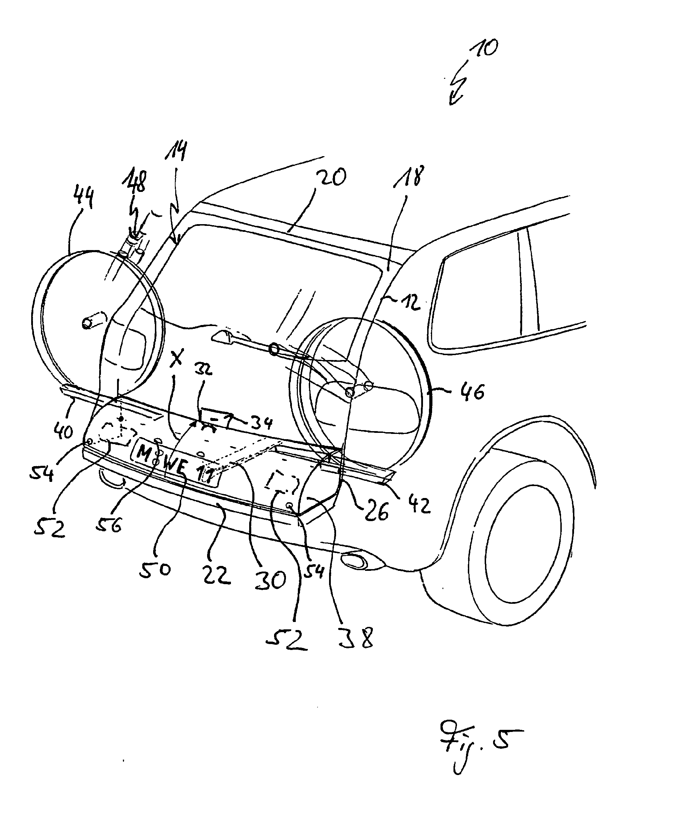

In Fig. 5 ist ein dem Fahrzeug nach Fig. 1 entsprechendes Fahrzeug 10 dargestellt, das mit einem eine zweite Ausführungsform darstellenden Erweiterungselement 38 für einen Laderaum versehen ist.

Das Erweiterungselement 38 entspricht in seiner Grundform dem in den Figuren 2 bis 4 dargestellten Erweiterungselement, unterscheidet sich von diesem aber dadurch, dass es zudem als Lastenträger genutzt werden kann. Insbesondere umfasst das Erweiterungselement 38 schienenartige Aufnahmen 40, 42 für Laufräder 44, 46 eines Fahrrads 48. Die Aufnahmen 40, 42 sind jeweils teleskopierbar ausgebildet, so dass sie bei Nichtbenutzung vollständig von dem den zusätzlichen Stauraum bildenden Körper des Erweiterungselements 38 aufgenommen sind.

Des Weiteren sind an dem Erweiterungselement 38 ein mit Leuchten versehenes 56 Fahrzeugkennzeichenfeld 50, Fahrzeugheckbeleuchtungseinrichtungen 52 sowie Abstandssensoren 54 ausgebildet. Die elektrischen Bauteile, die die Beleuchtungseinrichtungen 52, die Abstandssensoren 54 sowie die Kennzeichenfeldleuchten 56 umfassen, sind über Steckverbinder mit korrespondierenden Steckverbindern verbunden, die an dem unteren Heckklappenteil 22 ausgebildet sind. Die Steckverbinder können jeweils als Plattenkontakte und/oder als Stiftkontakte ausgebildet sein und ermöglichen so eine einfache Montage des Erweiterungselements 38.

Wenn die Aufnahmen 40, 42 für die Fahrradlaufräder 44, 46 eingefahren sind, ist das Erweiterungselement 38, wie in Fig. 5 durch mit einen Pfeil X dargestellt ist, zusammen mit dem Heckklappenteil 22 nach oben klappbar, so dass das untere Heckklappenteil 22 auch bei montiertem Erweiterungselement 38 geschlossen werden kann.

Das Erweiterungselement 38 stellt eine auch bei schneller Fahrt nutzbare Laderaumvergrößerung dar, die eine sichere Gepäckaufnahme ermöglicht. Zudem stellt die Laderaumerweiterung 38 sicher, dass bei geöffnetem unterem Heckklappenteil 22 kein Schmutz und keine Abgase in den Fahrzeuginnenraum eindringen können.

### Bezugszeichen

- 10: Fahrzeug
- 12: Hecköffnung
- 14: Heckklappenanordnung
- 16: Laderaum
- 18: oberes Heckklappenteil
- 20: oberer Rand
- 22: unteres Heckklappenteil
- 24: unterer Rand
- 26: Öffnungsbereich
- 28: Erweiterungselement
- 30: Ski
- 32: Schlossbügel
- 34: Schloss
- 36: Vorsprung
- 38: Erweiterungselement
- 40: Aufnahme
- 42: Aufnahme
- 44: Laufrad
- 46: Laufrad
- 48: Fahrrad
- 50: Fahrzeugkennzeichenfeld
- 52: Beleuchtungseinrichtung
- 54: Abstandssensoren
- 56: Leuchten

## Patentansprüche

1. Heckklappenanordnung eines Kraftfahrzeugs, die im Bereich einer Fahrzeughecköffnung (12) angeordnet ist und in Schließstellung einen Laderaum (16) mit ihrer Innenseite hinten begrenzt, umfassend ein oberes Heckklappenteil (18) und ein unteres Heckklappenteil (22), das im Bereich eines unteren Randes (24) der Fahrzeughecköffnung (12) angelenkt ist und in Öffnungsstellung im Wesentlichen horizontal ausgerichtet ist, wobei an der Innenseite des unteren Heckklappenteils (22) ein Erweiterungselement (28, 38) fixiert ist, das in Öffnungsstellung des unteren Heckklappenteils (22) den Laderaum (16) erweitert und diesen nach außen verschließt, **dadurch gekennzeichnet, dass** das Erweiterungselement (38) eine Lastenträgereinrichtung (40, 42) umfasst.

2. Heckklappenanordnung nach Anspruch 1, **dadurch gekennzeichnet, dass** das Erweiterungselement (28, 38) an seinen Rändern zumindest bereichsweise mit einer Dichteinrichtung versehen ist, die mit dem unteren Heckklappenteil (22), dem oberen Heckklappenteil (18) und/oder der Fahrzeugkarosserie zusammenwirkt.

3. Heckklappenanordnung nach Anspruch 1 oder 2, **dadurch gekennzeichnet, dass** das Erweiterungselement (28, 38) über eine Führungseinrichtung auf das untere Heckklappenteil (22) aufgeschoben ist.

4. Heckklappenanordnung nach Anspruch 1 oder 2, **dadurch gekennzeichnet, dass** das Erweiterungselement (28, 38) auf das untere Heckklappenteil (22) aufgeklipst ist.

5. Heckklappenanordnung nach einem der Ansprüche 1 bis 4, **dadurch gekennzeichnet, dass** das Erweiterungselement (28, 38) mittels einer Spann- und/oder Schraubeinrichtung an dem unteren Heckklappenteil (22) fixiert ist.

6. Heckklappenanordnung nach einem der Ansprüche 1 bis 5, **dadurch gekennzeichnet, dass** das Erweiterungselement (28, 38) eine Verriegelungseinrichtung (32) für das obere Heckklappenteil (18) aufweist.

7. Heckklappenanordnung nach einem der Ansprüche 1 bis 6, **dadurch gekennzeichnet, dass** das Erweiterungselement (28, 38) im Wesentlichen starr ausgeführt ist.

8. Heckklappenanordnung nach einem der Ansprüche 1 bis 6, **dadurch gekennzeichnet, dass** das Erweiterungselement (28, 38) im Wesentlichen aus Folie gebildet ist.

9. Heckklappenanordnung nach einem der Ansprüche 1 bis 8, **dadurch gekennzeichnet, dass** das Erweiterungselement (28) als Ablagewanne in dem Laderaum (16) fixierbar ist.

10. Hecklappenanordnung nach Anspruch 1, **dadurch gekennzeichnet, dass** die Lastenträgereinrichtung (40, 42) einen Fahrradträger umfasst.

11. Heckklappenanordnung nach einem der Ansprüche 1 bis 10, **dadurch gekennzeichnet, dass** das Erweiterungselement (38) ein Fahrzeugkennzeichenfeld (50) umfasst.

12. Heckklappenanordnung nach einem der Ansprüche 1 bis 11, **dadurch gekennzeichnet, dass** das Erweiterungselement (38) Beleuchtungsmittel (52, 56) umfasst.

13. Heckklappenanordnung nach einem der Ansprüche 1 bis 12, **dadurch gekennzeichnet, dass** das Erweiterungselement (38) Abstandssensoren (54) umfasst.

14. Heckklappenanordnung nach einem der Ansprüche 1 bis 13, **dadurch gekennzeichnet, dass** das Erweiterungselement (38) elektrische Kontaktelemente umfasst, die mit korrespondierenden elektrischen Kontaktelementen zusammenwirken, die vorzugsweise an dem unteren Heckklappenteil (22) ausgebildet sind.

15. Erweiterungselement für einen Laderaum (16) eines Fahrzeugs, zur Fixierung an der Innenseite eines unteren Heckklappenteils (22) einer zumindest ein oberes Heckklappenteil (18) und ein unteres Heckklappenteil (22) aufweisenden Heckklappenanordnung (14), so dass der Laderaum (16) in Öffnungsstellung des unteren Heckklappenteils (22) nach hinten erweitert ist, **gekennzeichnet durch** eine Lastenträgereinrichtung (40,42).

## Claims

1. Motor vehicle hatchback assembly which is arranged in the region of a vehicle rear opening (12) and the inside of which, in the closed position, rearwardly delimits a loading space (16), the hatchback assembly comprising an upper hatchback part (18) and a lower hatchback part (22) which is articulated in the region of a lower edge (24) of the vehicle rear opening (12) and, in the open position, is oriented substantially horizontally, wherein an expansion element (28, 38) is fixed on the inner side of the lower hatchback part (22), said expansion element, in the open position of the lower hatchback part (22), expanding the loading space (16) and closing the latter to the outside, **characterized in that** the expansion element (38) comprises a load carrier device (40, 42).

2. Hatchback assembly according to Claim 1,
**characterized in that** at least regions of the edges of the expansion element (28, 38) are provided with a sealing device which interacts with the lower hatchback part (22), the upper hatchback part (18) and/or the vehicle body.

3. Hatchback assembly according to Claim 1 or 2, **characterized in that** the expansion element (28, 38) is pushed onto the lower hatchback part (22) via a guide device.

4. Hatchback assembly according to Claim 1 or 2, **characterized in that** the expansion element (28, 38) is clipped onto the lower hatchback part (22).

5. Hatchback assembly according to one of Claims 1 to 4, **characterized in that** the expansion element (28, 38) is fixed on the lower hatchback part (22) by means of a clamping and/or screwing device.

6. Hatchback assembly according to one of Claims 1 to 5, **characterized in that** the expansion element (28, 38) has a locking device (32) for the upper hatchback part (18).

7. Hatchback assembly according to one of Claims 1 to 6, **characterized in that** the expansion element (28, 38) is of substantially rigid design.

8. Hatchback assembly according to one of Claims 1 to 6, **characterized in that** the expansion element (28, 38) is substantially formed from thick sheeting.

9. Hatchback assembly according to one of Claims 1 to 8, **characterized in that** the expansion element (28) is fixable in the loading space (16) in the form of a storage trough.

10. Hatchback assembly according to Claim 1,
**characterized in that** the load carrier device (40, 42) comprises a bicycle rack.

11. Hatchback assembly according to one of Claims 1 to 10, **characterized in that** the expansion element (38) comprises a vehicle number plate area (50).

12. Hatchback assembly according to one of Claims 1 to 11, **characterized in that** the expansion element (38) comprises illuminating means (52, 56).

13. Hatchback assembly according to one of Claims 1 to 12, **characterized in that** the expansion element (38) comprises distance sensors (54).

14. Hatchback assembly according to one of Claims 1 to 13, **characterized in that** the expansion element (38) comprises electric contact elements which interact with corresponding electric contact elements which are preferably formed on the lower hatchback part (22).

15. Expansion element for a loading space (16) of a vehicle, for fixing on the inner side of a lower hatchback part (22) of a hatchback assembly (14), which has at least one upper hatchback part (18) and a lower hatchback part (22), such that the loading space (16) is expanded to the rear in the open position of the lower hatchback part (22), **characterized by** a load carrier device (40, 42).

## Revendications

1. Agencement de hayon arrière d'un véhicule automobile, qui est disposé dans la zone d'une ouverture arrière de véhicule (12) et délimite à l'arrière, en position fermée, un coffre (16) avec son côté intérieur, comprenant une partie de hayon arrière supérieure (18) et une partie de hayon arrière inférieure (22), qui est articulé dans la zone d'un bord inférieur (24) de l'ouverture arrière de véhicule (12) et est orienté pour l'essentiel horizontalement en position ouverte, sachant qu'un élément d'extension (28, 38) est fixé au niveau du côté intérieur de la partie de hayon arrière inférieure (22), ledit élément élargissant le coffre (16) dans la position ouverte de la partie de hayon arrière inférieure (22) et le fermant vers l'extérieur, **caractérisé en ce que** l'élément d'extension (38) comprend un dispositif de support de charge (40, 42).

2. Agencement de hayon arrière selon la revendication 1, **caractérisé en ce que** l'élément d'extension (28, 38) est pourvu au niveau de ses bords au moins partiellement d'un dispositif d'étanchéité qui interagit avec la partie de hayon arrière inférieure (22), la partie de hayon arrière supérieure (18) et/ou la carrosserie du véhicule.

3. Agencement de hayon arrière selon la revendication 1 ou 2, **caractérisé en ce que** l'élément d'extension (28, 38) est poussé sur la partie de hayon arrière inférieure (22) par l'intermédiaire d'un dispositif de guidage.

4. Agencement de hayon arrière selon la revendication 1 ou 2, **caractérisé en ce que** l'élément d'extension (28, 38) est clipsé sur la partie de hayon arrière inférieure (22).

5. Agencement de hayon arrière selon l'une quelconque des revendications 1 à 4, **caractérisé en ce que** l'élément d'extension (28, 38) est fixé à la partie de hayon arrière inférieure (22) à l'aide d'un dispositif de serrage et/ou de vissage.

6. Agencement de hayon arrière selon l'une quelconque des revendications 1 à 5, **caractérisé en ce que** l'élément d'extension (28, 38) comporte un dispositif de verrouillage (32) pour la partie de hayon arrière supérieure (18).

7. Agencement de hayon arrière selon l'une quelconque des revendications 1 à 6, **caractérisé en ce que** l'élément d'extension (28, 38) est réalisé de façon pour l'essentiel rigide.

8. Agencement de hayon arrière selon l'une quelconque des revendications 1 à 6, **caractérisé en ce que** l'élément d'extension (28, 38) est constitué pour l'essentiel d'un film.

9. Agencement de hayon arrière selon l'une quelconque des revendications 1 à 8, **caractérisé en ce que** l'élément d'extension (28) peut être fixé dans le coffre (16) sous la forme d'un bac de rangement.

10. Agencement de hayon arrière selon la revendication 1, **caractérisé en ce que** le dispositif de support de charge (40, 42) comprend un porte-vélos.

11. Agencement de hayon arrière selon l'une quelconque des revendications 1 à 10, **caractérisé en ce que** l'élément d'extension (38) comprend une plaque d'immatriculation de véhicule (50).

12. Agencement de hayon arrière selon l'une quelconque des revendications 1 à 11, **caractérisé en ce que** l'élément d'extension (38) comprend des moyens d'éclairage (52, 56).

13. Agencement de hayon arrière selon l'une quelconque des revendications 1 à 12, **caractérisé en ce que** l'élément d'extension (38) comprend des capteurs de distance (54).

14. Agencement de hayon arrière selon l'une quelconque des revendications 1 à 13, **caractérisé en ce que** l'élément d'extension (38) comprend des éléments de contact électrique qui interagissent avec les éléments de contact électrique correspondants réalisés de préférence au niveau de la partie de hayon arrière inférieure (22).

15. Élément d'extension pour un coffre (16) d'un véhicule, à fixer au niveau du côté intérieur d'une partie de hayon arrière inférieure (22) d'au moins un agencement de hayon arrière (14) comportant une partie de hayon arrière supérieure (18) et une partie de hayon arrière inférieure (22), de sorte que le coffre (16) est agrandi vers l'arrière en position ouverte de la partie de hayon arrière inférieure (22), **caractérisé par** un dispositif de support de charge (40, 42).
